# FASCICULE DE BREVET EUROPEEN

(11) **EP 0 771 580 B1**
(45) Date de publication et mention de la délivrance du brevet: **16.05.2001**
(21) Numéro de dépôt: 96420317.8
(22) Date de dépôt: 25.10.1996
(51) Int. Cl.: A63B 49/00, A63C 5/075, F16F 7/08

(54) **Dispositif amortisseur de vibrations destiné à être monté sur un article de sport**
Schwingungsdämpfungsvorrichtung, die an ein Sportgerät montiert werden kann
Vibration damping device suitable to be mounted to a sports article

(30) Priorité: 30.10.1995 FR 9513050
(43) Date de publication de la demande: 07.05.1997
(73) Titulaire: Skis Dynastar, 74700 Sallanches (FR)
(72) Inventeur: Franco, Antoine, 74700 Sallanches (FR); Yonnet, Jean-Paul, 38240 Meylan (FR)
(74) Mandataire: Vuillermoz, Bruno

(56) Documents cités:
- EP-A- 0 521 272
- WO-A-85/01220
- US-A- 3 817 356

## Description

### Domaine technique

L'invention concerne le domaine de l'amortissement des vibrations engendrées sur les articles de sport tels que les planches de glisse, les raquettes de tennis ou de squash, ainsi que les clubs de golf. Elle vise plus précisément un dispositif fonctionnant sur le principe de l'utilisation de champs magnétiques pour résister aux déformations des structures, et donc pour absorber de l'énergie, soit par frottement, soit par effets de courants induits, soit par les deux simultanément. Bien entendu, cette structure est suffisamment générale pour pouvoir l'adapter de manière évidente à beaucoup d'autres articles de sport.

### Techniques antérieures

Comme on le sait, lors de la pratique d'un sport nécessitant la frappe d'une balle par un article tel qu'une raquette ou un club de golf, l'impact de la balle engendre un certain nombre de vibrations qui se propagent du point d'impact jusqu'à toutes les zones dudit article. Ces vibrations génèrent deux types de problèmes principaux, à savoir :
1) une perte de précision due à la mise en oscillations de la raquette ou du club et,
2) la transmission de vibrations dans le bras de l'utilisateur, qui perturbent les sensations et peuvent même engendrer des douleurs (tennis elbow).

Le même problème se rencontre lors de la pratique du ski ou du surf, lorsque la planche entre en oscillations. Les vibrations engendrées par ces mouvements se transmettent notamment dans la zone du patin jusqu'au niveau des carres, ce qui engendre des imprécisions dans la conduite du ski.

Pour conserver les performances de l'article concerné, il a été démontré que le dispositif amortisseur devait être localisé à des endroits bien précis, notamment sur les ventres de vibrations.

Pour diminuer les effets néfastes de ces vibrations, on a proposé depuis longtemps d'augmenter le coefficient d'amortissement de la structure vibrante (raquette, ski, club de golf), en incorporant un élément apte à absorber une certaine partie de l'énergie mécanique de vibrations et à la transformer en chaleur.

On a proposé dans les documents FR 2 575 393, FR 2 680 694, FR 2 608 444 (correspondant respectivement aux brevets américains US 4 865 345, US 5 277 423 et US 4 875 679) concernant respectivement le domaine du ski, du golf et du tennis, un élément amortisseur composé d'une couche viscoélastique dont une face est collée sur l'article de sport et dont l'autre face reçoit une plaque de contraintes rigide. Les déformations de l'article engendrent la déformation du bloc viscoélastique par une de ses faces, l'autre face restant aussi plane que le permet la plaque de contraintes. Cette déformation provoque donc un cisaillement dans la couche viscoélastique et donc l'absorption d'énergie et partant, l'amortissement des oscillations.

Bien que satisfaisante et équipant de nombreux articles de sport, cette solution présente certains inconvénients, notamment en ce qui concerne la masse, le coût, la raideur et la sensibilité aux variations de température.

On a décrit dans le document WO 85/01220 un dispositif amortisseur destiné à être monté sur un article de sport. Un tel dispositif comprend une pluralité de lames métalliques entre lesquelles sont collées des couches de matériau viscoélastique. Chaque couche de matériau viscoélastique est destinée à freiner le déplacement relatif des lames. Il s'agit là d'un principe d'amortissement par apparition de phénomènes de cisaillement à l'intérieur de la couche de matériau viscoélastique. Les mêmes inconvénients que ceux précédemment cités sont observés avec un tel dispositif à savoir notamment un excès de poids et d'encombrement.

Le problème que se propose de résoudre l'invention est de fournir un dispositif amortisseur de vibrations fonctionnant par frottements, par effet de courants induits ou par ces deux effets simultanément.

### Brève description de l'invention

Comme déjà dit, l'invention concerne un dispositif amortisseur de vibrations destiné à être monté sur un article de sport tel notamment une raquette, un ski ou un club de golf, comportant au moins deux éléments au moins en partie superposés pour former un empilement, et montés en coulissement l'un par rapport à l'autre, chaque élément dudit empilement étant solidaire à l'article au moins par une extrémité, les extrémités des éléments adjacents étant décalées l'une par rapport à l'autre de telle façon que les déformations de l'article dues aux vibrations engendrent le coulissement des éléments adjacents.

Ce dispositif se caractérise en ce qu'au moins un des éléments superposés est aimanté, un des autres éléments de l'empilement étant en un matériau sensible au champ magnétique engendré par l'élément aimanté.

Autrement dit, le dispositif conforme à l'invention est constitué d'au moins un ensemble de deux à dix lames intercalées, chacune des lames étant solidaire de l'article par une de ses extrémités, de sorte que lors des déformations de ce dernier, les points d'ancrage de chaque lame se déplacent l'un par rapport à l'autre en entraînant chacune des lames et donc en provoquant le déplacement relatif des lames entre elles.

En pratique, deux éléments adjacents sont solidaires de l'article par des extrémités opposées.

On peut identifier plusieurs principes de fonctionnement de l'invention. Dans une première conception, les différentes lames sont tangentes et frottent les unes sur les autres lors de leur coulissement relatif. De cette manière, l'attraction magnétique des diverses plaques entre elles provoque une pression de contact, ce qui permet le placage des lames les unes par rapport aux autres sans utilisation de moyen mécanique.

Dans une variante, et pour régler le coefficient d'amortissement résultant du dispositif, une des faces en regard de deux éléments adjacents de l'empilement est recouverte d'une couche destinée à adapter la capacité de frottement des deux éléments adjacents entre eux pour optimiser l'amortissement.

Autrement dit, les différentes lames coulissant entre elles présentent des surfaces extérieures possédant des qualités tribologiques adaptées au coefficient d'amortissement choisi. L'invention permet donc de combiner la force de contact due à l'attraction magnétique avec un état de surface présentant un coefficient de frottement déterminé.

Dans le cas de figure où les lames sont au contact les unes des autres, celles-ci peuvent présenter des profils complémentaires en nervure ou en chevron assurant un guidage latéral du déplacement relatif de ces lames.

Pour assurer le placage caractéristique de l'invention, plusieurs variantes de réalisation peuvent être adoptées.

Ainsi, dans une première variante un des éléments adjacents à l'élément aimanté est en fer doux. De la sorte, l'élément aimanté attire l'élément en fer doux et leur contact, sous l'effort d'attraction magnétique provoque une dissipation d'énergie lors du coulissement relatif à ces deux éléments.

Dans une seconde variante, l'empilement comporte au moins un ensemble de deux éléments immobiles l'un par rapport à l'autre, dont l'un est constitué par l'élément aimanté et l'autre est attiré par ledit élément aimanté, ainsi qu'un élément intermédiaire intercalé entre les deux éléments aimantés, et mobile par rapport à ceux-ci. De la sorte, l'ensemble des deux éléments immobiles assure le pincement de l'élément intermédiaire. Il s'ensuit que lors du coulissement de l'élément intermédiaire, le travail des forces de frottement se traduit en une dissipation d'énergie et donc un amortissement recherché.

En pratique, les deux éléments immobiles peuvent être soit deux éléments aimantés, soit un élément aimanté et un élément en fer doux.

Avantageusement, l'élément aimanté présente une aimantation multipolaire distribuée longitudinalement, transversalement, ou de façon combinée, à la manière d'un quadrillage. Cette aimantation peut être distribuée sur une seule face, ou bien sur les deux faces de l'élément aimanté.

Dans ce cas, l'élément aimanté peut être avantageusement constitué de la plaque aimantée proprement dite et d'une culasse magnétique refermant les lignes de champ.

Pour régler l'intensité de la force de placage des différents éléments de l'empilement, la face de l'élément aimanté en regard des éléments adjacents peut avantageusement présenter des zones en excroissance formant pièces polaires, canalisant le champ magnétique. On renforce ainsi localement l'induction, donc la force de serrage, au niveau des dents formant pièces polaires.

Selon une seconde conception de l'invention, au moins un des éléments adjacents à l'élément aimanté comprend une zone en un matériau conducteur de l'électricité, dans laquelle apparaissent des courants induits lors du coulissement relatif de l'élément aimanté.

Autrement dit, lorsque l'élément aimanté se déplace par rapport à l'élément conducteur adjacent, la variation de flux du champ magnétique à l'intérieur de l'élément conducteur induit une force électromotrice qui se traduit par la naissance de courants induits. Ces courants induits, plus précisément leur composante perpendiculaire au déplacement relatif des deux éléments réagit avec le champ émanant de l'élément aimanté pour engendrer une force parallèle au sens de déplacement du coulissement. Le travail de cette force lors du coulissement correspond à la dissipation d'une quantité d'énergie provoquant l'amortissement recherché.

Ainsi en pratique, cet élément conducteur peut avantageusement présenter une surface ajourée formant des boucles fermées. Il peut s'agir dans ce cas d'un élément métallique massif, par exemple en cuivre, en aluminium ou en acier.

Dans une seconde variante de réalisation, l'élément conducteur comporte un corps en matériau magnétique et des spires fermées en un matériau conducteur d'électricité.

De la sorte, les lignes de champ sont refermées à travers le corps magnétique et les courants induits passent dans les spires conductrices.

Dans une troisième variante de réalisation, l'élément aimanté et l'élément adjacent conducteur présentent des pièces polaires destinées à canaliser le flux magnétique, et ainsi augmenter l'induction au niveau de l'entrefer, et partant l'intensité des courants induits.

Avantageusement, pour augmenter la variation de flux due au coulissement, et ainsi des courants induits et la force de réaction correspondante, les pièces polaires de l'élément conducteur sont situées à mi-chemin entre les pièces polaires de l'élément aimanté, lorsque le dispositif est au repos.

En pratique, dans une forme particulière de réalisation, une des lames est placée à l'intérieur de la structure à amortir sous sa surface extérieure. De la sorte, il coopère, soit par attraction magnétique, soit par génération de courants induits avec une lame qui est fixée par une extrémité sur la surface supérieure de l'article. Ainsi, selon le premier principe de l'invention, cette deuxième lame peut frotter sur la surface extérieure de la structure de l'article. Dans ce cas, les lames ne sont pas en contact direct l'une de l'autre, mais sont séparées par la paroi externe de la structure. Selon le deuxième principe de l'invention, le champ magnétique traverse la surface extérieure de l'article pour engendrer des courants induits dans l'autre lame.

En d'autres termes , une des lames peut être placée à l'intérieur de la structure de l'article à amortir, sous sa surface extérieure. Elle attire une lame qui est fixée par une de ses extrémités sur la surface extérieure de l'article. Cette deuxième lame peut frotter sur la face extérieure de la structure. Dans ce cas, les lames ne sont pas en contact direct l'une de l'autre mais sont séparées par la paroi externe de la structure.

Dans une variante de réalisation, le dispositif amortisseur est entièrement noyé à l'intérieur de la structure de l'article, comme par exemple à l'intérieur du noyau d'une planche de glisse, ou du manche d'un club de golf ou d'une raquette de tennis.

Selon une seconde conception de l'invention, les différentes lames sont écartées les unes des autres et coulissent les unes par rapport aux autres avec un minimum de frottements. Avantageusement, l'empilement présente des éléments de guidage du coulissement des différents éléments plats entre eux, par exemple des glissières présentant des rainures longitudinales aptes à guider les bords de chaque lame.

Dans ces différentes formes de réalisation, les éléments de l'empilement sont montés soit sur une embase souple, elle-même solidaire de l'article soit directement sur une des surfaces extérieures de l'article, soit en partie ou entièrement à l'intérieur de la structure. Le dispositif est localisé sur l'article, soit au niveau d'un ventre de vibrations, soit dans une zone de déformation maximale.

L'invention trouve de multiples applications dans le domaine du sport, notamment, dans le ski, le tennis ou le golf.

Dans son application au domaine du ski, le dispositif conforme à l'invention est implanté sur la face supérieure du ski, ou sur les chants, voire encore en combinaison sur ces deux surfaces, ou encore entièrement ou en partie à l'intérieur de la structure.

Dans l'application de l'invention au domaine du tennis ou du squash, le dispositif amortisseur conforme à l'invention peut avantageusement être implanté soit sur le manche, soit sur le cadre, soit sur les branches de liaison du manche au cadre, soit encore sur l'éventuel pont transversal reliant les branches.

Dans son application au domaine du golf, le dispositif amortisseur épouse une forme allongée, présentant éventuellement un galbe en forme de gouttière ouvert vers le manche, d'une largeur de l'ordre de cinq millimètres.

Dans une forme plus sophistiquée de l'invention, le dispositif peut prendre une forme gauche et vrillée et venir s'enrouler en hélice sur une portion du manche. Cette disposition permet d'amortir les vibrations dues aux effets de torsion du manche observés lors des impacts.

### Description sommaire des dessins

La manière de réaliser l'invention ainsi que les avantages qui en découlent ressortiront bien de la description des modes de réalisation qui suivent, à l'appui des figures annexées dans lesquelles :

La figure 1 est une vue schématique de côté d'un dispositif conforme à l'invention fonctionnant par le travail de force de frottement.

La figure 2 est une vue schématique de la déformation du dispositif conforme à l'invention, montrée de façon exagérée.

Les figures 3 à 5 sont des vues en perspective sommaire schématiques d'éléments aimantés conformes à l'invention, présentant diverses distributions d'aimantation à savoir monoface, transversale, longitudinale, ou biface associées à une culasse magnétique.

Les figures 6 et 7 sont des vues de côté montrant des variantes de réalisation de l'invention, dans laquelle les plaques aimantées sont encadrées par deux plaques en fer doux.

La figure 8 est une vue de côté et schématique d'une forme de réalisation dans laquelle l'élément intermédiaire est pincé entre deux éléments magnétiques s'attirant.

La figure 9 est une vue de détail de la zone de contact des diverses plaques de la figure 8.

La figure 10 est une vue de côté schématique d'un dispositif conforme à l'invention fonctionnant par courants induits.

La figure 11 est une vue en perspective sommaire de la plaque intermédiaire conductrice dans laquelle apparaissent les courants induits.

La figure 12 est une coupe de détail d'une variante, dans laquelle la lame aimantée présentent des pièces polaires, et la lame conductrice comporte des spires bobinées.

Les figures 13 et 14 sont des représentations de la figure 12 dans lesquelles les éléments mobiles vont coulisser les uns par rapport aux autres, entre deux positions extrémales.

La figure 15 est une vue en perspective sommaire du dispositif conforme à l'invention monté sur un ski.

Les figures 16 et 17 sont respectivement deux vues en coupe transversale de dispositif de guidage de déplacement longitudinal relatif des lames.

La figure 18 est une vue de dessus d'une variante de réalisation du dispositif de guidage montré en figure 19 en coupe transversale selon les flèches XIX-XIX' de la figure 18.

La figure 20 est une coupe longitudinale d'une variante de l'invention montée sur un ski.

La figure 21 est une vue en coupe transversale schématique d'un ski équipé d'un dispositif amortisseur dont une des lames est noyée à l'intérieur du ski.

La figure 22 est une vue en coupe longitudinale selon les flèches XXII- XXII' de la figure 21.

La figure 23 est une vue de coté d'un dispositif dans lequel la lame intermédiaire est solidaire de la surface du ski par une extrémité déportée par rapport aux lames adjacentes.

La figure 24 est une vue de face d'un dispositif conforme à l'invention monté sur une raquette de tennis.

La figure 25 est une coupe selon les flèches XXV - XXV' de la figure 24.

La figure 26 est une vue en perspective sommaire d'un dispositif conforme à l'invention monté sur un manche de club de golf.

La figure 27 est une vue de détail d'un manche de golf équipé d'une variante de l'invention.

### Manières de réaliser l'invention

Avant de décrire plus précisément l'application de l'invention au domaine du ski, du golf et du tennis, on va s'attacher à mettre en valeur les caractéristiques essentielles du dispositif amortisseur conforme à l'invention. Comme déjà dit, l'invention fonctionne selon deux principes mettant en oeuvre des phénomènes sensiblement différents, bien que toutes deux utilisent l'attraction magnétique comme principe commun.

### Première manière de réaliser l'invention

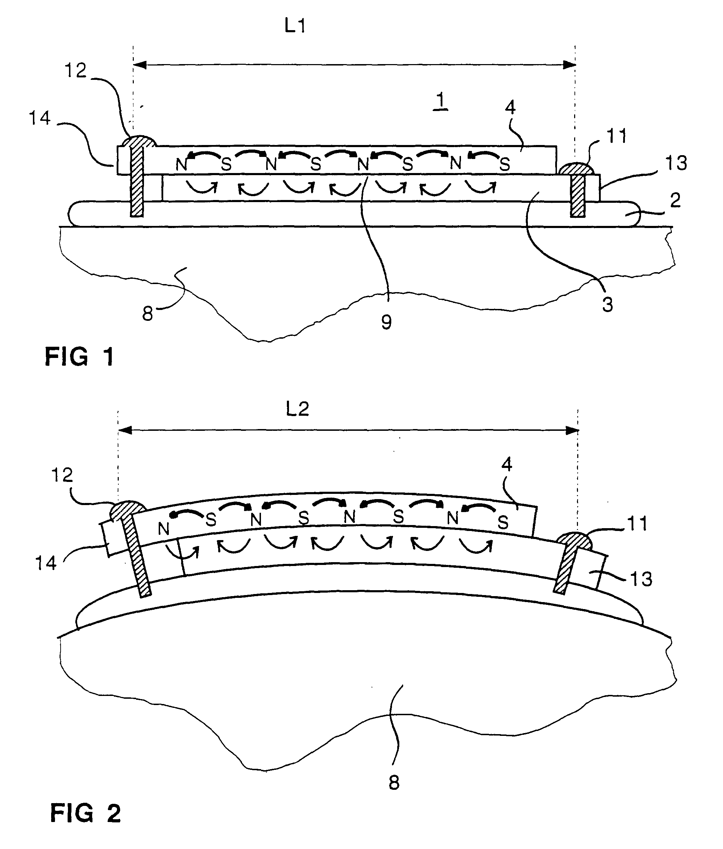

Comme déjà dit, l'amortisseur (1) conforme à l'invention se présente sous la forme d'une embase souple (2) suivant avec le minimum de contraintes les déformations de l'article (8), sur laquelle sont empilés une pluralité d'éléments allongés formant des lames (3 -4). Le nombre de lames empilé n'est pas limité à deux comme illustré sur la figure 1, mais peut aller jusqu'à une dizaine. L'extrémité (13) de la lame (3) est fixée à une extrémité de l'embase (2) par un jeu de vis (11), de rivets ou tout autre moyen d'ancrage connu alors que l'extrémité (14) de la lame (4) est fixée à l'autre extrémité de l'embase (2) par un jeu de vis (12), de rivets ou tout autre moyen d'ancrage connu. L'espacement entre les points d'ancrage (11,12) des lames est déterminé pour que les lames adjacentes (3,4) présentent une grande surface de contact en regard. Dans le cas de l'utilisation d'un nombre plus important de lames (voir figure 7), on obtient deux empilements (3-7) enchevêtrés et pénétrant profondément l'un dans l'autre.

Selon une caractéristique principale de l'invention, au moins une des lames (4) est aimantée de manière à attirer les lames (3) contiguës. De multiples combinaisons de matériaux sont possibles pour arriver à ce résultat. Ainsi, on peut utiliser un jeu de lames aimantées (4, 6) coulissant à travers un jeu de lames en fer doux (3, 5, 7), par exemple en acier, ou bien alors deux ensembles de lames aimantées. Le principe de l'invention est respecté dès lors qu'il existe une force magnétique de serrage entre deux lames adjacentes. Ainsi, sans qu'il soit besoin de dispositif mécanique de serrage, toutes les lames sont naturellement plaquées les unes contre les autres, pour générer un frottement non négligeable.

Le principe de fonctionnement de l'invention apparaît clairement à la lecture des figures 1 et 2. Comme on le voit, lors des déformations du support (8), sa surface supérieure prend une forme cintrée. Il s'ensuit que l'embase souple (2) qui lui est fermement solidaire adopte également cette forme cintrée. En conséquence, les points d'ancrage (11, 12) divergent, c'est-à-dire s'éloignent (L1<L2) puis convergent dans une phase ultérieure non représentée avant de continuer un mouvement alternatif amorti. Ce mouvement entraîne le décalage de lames (ou des ensembles de lames dans le cas de la figure 7). Ce décalage provoque au niveau des surfaces de contact (9) un frottement résistant qui se manifeste par la dissipation d'une partie de l'énergie vibratoire. L'utilisation caractéristique d'un matériau aimanté permet d'obtenir à tout instant un contact de toutes les lames (3, 4 ; 3 -7) entre elles, ce qui assure un frottement continu, sans nécessiter aucun organe mécanique supplémentaire.

En pratique, la pression exercée entre deux lames adjacentes est de l'ordre de 4 kg/cm² xB² où B est l'intensité de l'induction en Tesla. Il est à noter que l'intensité de la force de placage croît avec le carré de l'induction. Dans le cas d'utilisation d'aimant du type caoutchouc magnétique d'induction 0,2 Tesla, cette pression est de l'ordre de 0,16 kg/cm².

Cette dissipation d'énergie se traduit au niveau de la structure générale par un amortissement du phénomène vibratoire, ce qui correspond à l'effet recherché.

Le facteur d'amortissement résultant dépend de plusieurs paramètres, notamment du coefficient de frottement des lames entre elles, de leur nombre, leurs dimensions ainsi que de la pression de contact.

En ce qui concerne le coefficient de frottement, celui-ci est déterminé par la nature des lames en regard et surtout par leur état de surface. Bien entendu, ce coefficient peut être volontairement ajusté à une valeur déterminée par le choix d'un matériau de recouvrement de la lame. Par exemple, elle pourrait être revêtue de polytétrafluoroéthylène.

Dans ce cas, l'épaisseur de la couche de recouvrement devra être correctement calculée pour ne pas augmenter excessivement l'entrefer entre les lames adjacentes. Cette épaisseur pourra typiquement être de quelques centièmes de millimètre.

La capacité d'absorption d'énergie du dispositif est directement croissante en fonction du nombre de lames frottant les unes contres les autres. Ainsi, à partir d'un minimum de deux lames, on peut réaliser diverses variantes allant jusqu'à un nombre de dix lames. Typiquement on considère qu'on obtient un comportement satisfaisant pour un nombre de lames voisin de trois.

Par ailleurs, les types de matériaux utilisés, notamment en ce qui concerne la lame aimantée, déterminent le champ magnétique engendrant l'attraction des différentes lames entre elles. De préférence, on utilise des aimants céramiques, notamment du type alliage néodyme-fer-bore ou des ferrites, obtenus par frittage, ou encore des composites caoutchouc-ferrite de baryum, qui permettent d'obtenir une attraction, suffisante pour un ensemble acceptable en termes de poids et d'épaisseur.

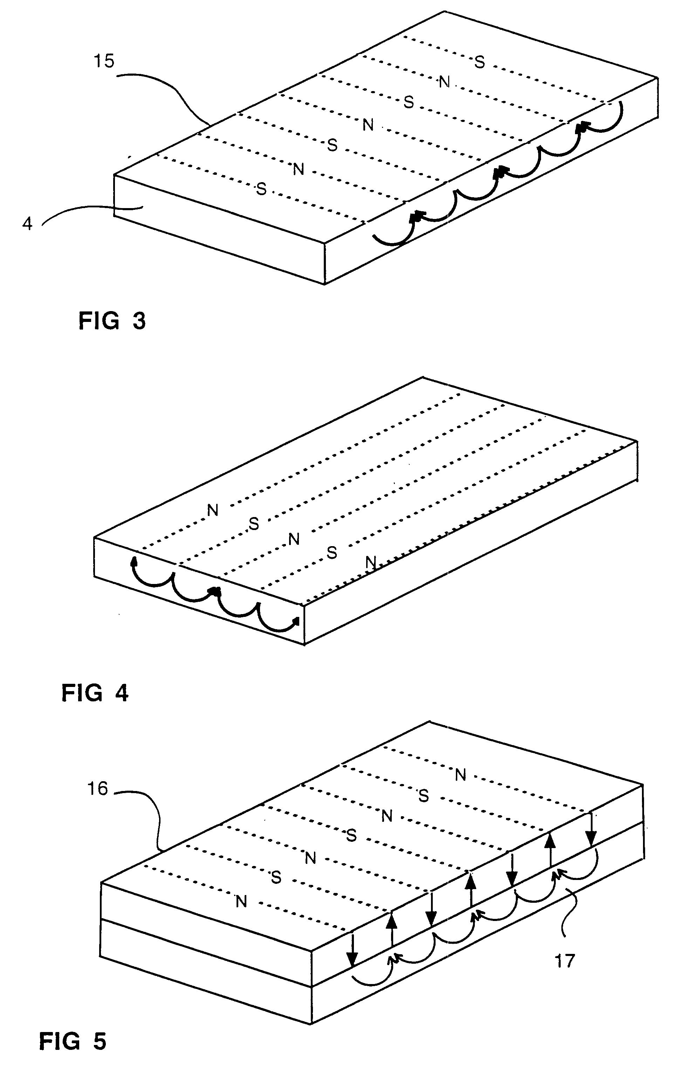

En ce qui concerne l'aimantation de la lame aimantée, celle-ci peut être distribuée de façons diverses, comme illustré aux figures 3 à 5. Ainsi, comme on le voit à la figure 3, l'aimantation peut être multipolaire et localisée sur une face (15) de la lame aimantée (4), à savoir celle en regard de la lame adjacente. Cette distribution multipolaire peut être, transversale (voir figure 4) ou longitudinale (voir figure 3), voire encore réalisée sous forme d'un quadrillage dans les deux directions (non représenté). On peut également utiliser des lames aimantées (4) dont l'aimantation est traversante d'une face à l'autre (voir figure 5). Dans ce cas, il peut s'avérer avantageux de coupler cette lame aimantée (16) avec une lame (17) en fer doux servant de culasse magnétique pour former un ensemble équivalent à une lame aimantée à aimantation monoface.

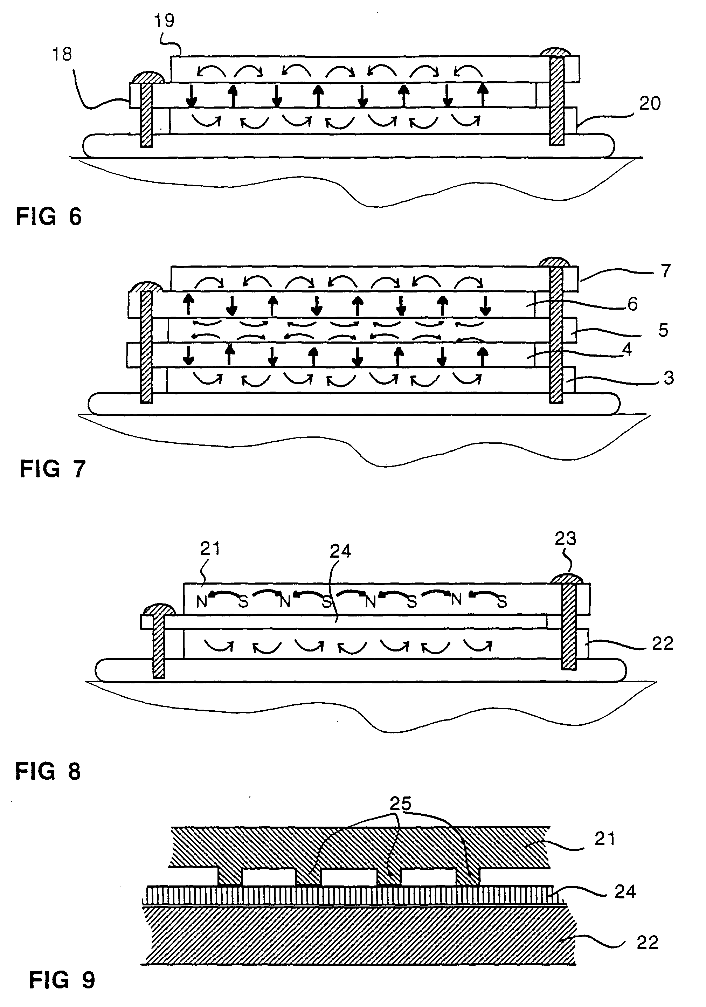

Dans la variante illustrée en figure 6, la lame aimantée (18), à aimantation traversante, est prise en sandwich entre deux lames en fer doux (19, 20). Cela permet de doubler la surface de frottement et de régler ainsi l'amortissement à une valeur supérieure.

Dans une autre variante illustrée à la figure 8, la lame aimantée (21) est associée à une seconde lame (22), soit aimantée, soit en fer doux, solidaire du même point d'ancrage (23). Entre ces deux lames (21, 22), est insérée une lame intercalaire (24) réalisée en un matériau de préférence non magnétique. De la sorte, les deux lames magnétiques (21, 22) encadrant la lame intercalaire (24) exercent une pression sur cette dernière et provoquent de la même manière que précédemment une force de frottement produisant l'effet amortisseur recherché.

Comme on le voit sur la figure 9 constituant un détail de la figure 8, la lame aimantée (21) peut présenter une pluralité de dents (25) constituant des pièces polaires dirigées vers la lame magnétique complémentaire (22). De la sorte, les lignes de champ sont concentrées au niveau de ces dents, ce qui augmente notoirement la valeur de l'induction dont on a vu qu'elle constituait un élément prépondérant dans l'intensité de la force de placage. On améliore ainsi les qualités d'amortissement.

En pratique, l'épaisseur de la lame aimantée peut être de l'ordre de 0,5 à 10 millimètres. En ce qui concerne le pas entre pôles magnétiques, celui-ci est de façon indicative et non limitative compris entre 0,4 millimètre et 1 centimètre de préférence au voisinage de 2 millimètres.

Pour faciliter le guidage du déplacement des différentes lames entre elles, on peut éventuellement donner à ces lames un profil particulier qui empêche le déplacement transversal des lames entre elles. Plusieurs architectures peuvent être envisagées, notamment les profils en gouttière ou chevrons en "V", les profils avec nervures en gigogne destinés à superposer les plaques et encastrer les nervures les unes dans les autres, voire encore des profils présentant des prolongements latéraux destinés à border les lames adjacentes.

### Deuxième manière de réaliser l'invention

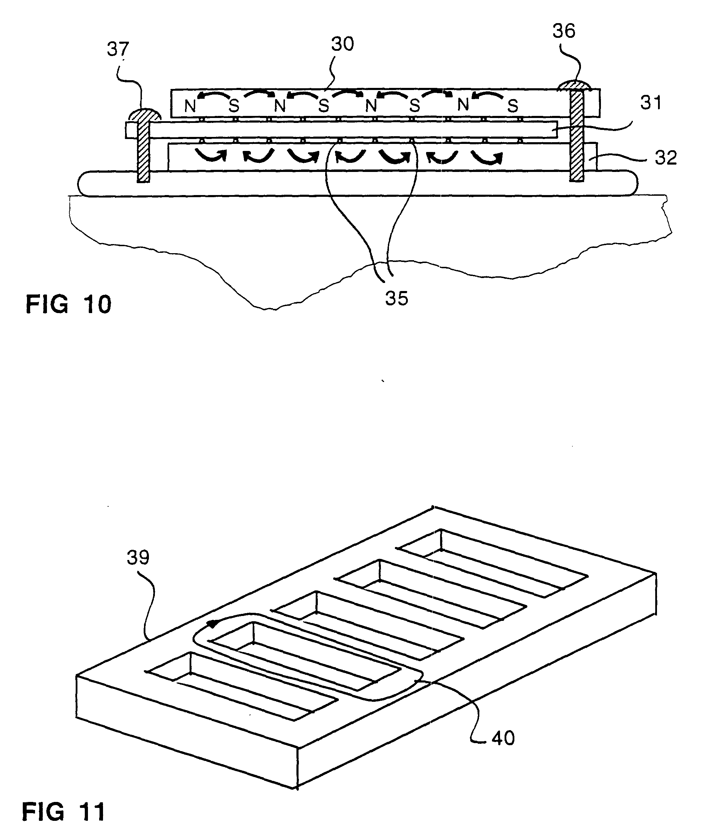

Comme évoqué ci-avant, et tel qu'illustré schématiquement aux figures 10 à 14, le dispositif amortisseur conforme à l'invention peut comporter des lames (30, 31, 32) qui coulissent les unes par rapport aux autres, mais avec la minimum de frottements.

Matériellement, le dispositif répondant à ce principe de fonctionnement diffère du précédent par le fait que les lames (30, 32) ne frottent pas nécessairement les unes contre les autres et sont par exemple entretoisées par des galets (35) ou par tout autre moyen équivalent afin de maintenir un écartement constant. Le phénomène physique mis en jeu est ici la génération de courants induits dans une lame conductrice par le champ magnétique émanant de la lame aimantée.

Ainsi, comme on le voit à la figure 10, dans une forme minimale, le dispositif conforme à ce second principe de fonctionnement est constitué de deux lames aimantées (30, 32) immobiles l'une par rapport à l'autre, et encadrant une lame (31) présentant une zone conductrice de l'électricité. Bien évidemment une des deux lames aimantées (30, 32) peut être remplacée par une culasse magnétique en fer doux. La lame intermédiaire (31) peut être de conception très variable, et constituée dans la forme la plus simple par une lame métallique dans un matériau conducteur, tel que le cuivre, l'aluminium ou le fer. De façon préférée, on choisira un matériau dont la résistivité est minimale tel que le cuivre.

Ainsi, lorsque l'article est le siège de vibrations, et que comme déjà dit, les points d'ancrage (36, 37) des ensembles de lame se déplacent l'un par rapport à l'autre, la lame intermédiaire (31) en matériau conducteur coulisse par rapport aux lames aimantées (30, 32). Il s'ensuit que, du fait de la répartition multipolaire de l'aimantation, le flux du champ magnétique varie à l'intérieur de la lame conductrice (31). Au cours du mouvement, il se forme donc des boucles de courants qui s'opposent à cette variation de flux. Il apparaît donc un effort retardateur qui est orienté en direction opposée à celle du déplacement. Cet effort retardateur contribue donc à l'amortissement des vibrations.

Un calcul montre que la puissance dissipée par une unité de volume est proportionnelle au carré de l'induction présente dans la lame conductrice, proportionnelle au carré de la vitesse de déplacement, et inversement proportionnelle à la résistivité du matériau conducteur. Ainsi, pour avoir une puissance dissipée importante, il convient d'avoir une induction et une vitesse de déplacement élevées combinées avec une résistivité faible. En outre, le pas polaire de l'élément, correspondant à la distance entre les pôles magnétiques des lames aimantées doit être suffisamment petit pour que les courants induits dans la lame conductrice se referment par des circuits courts de façon à augmenter l'intensité de ce courant induit.

Ainsi, à titre d'exemple, pour une lame conductrice en cuivre, c'est-à-dire de resistivité égale à 2.10⁻⁸ Ohm.mètre, pour un coulissement d'amplitude 0,2 millimètres à 50 Hertz, et pour une induction de l'ordre de 1 Tesla, la puissance dissipée par unité de volume est de l'ordre de 20 kW par mètre cube. Si l'on utilise une lame rectangulaire de dimension 10 centimètres par 5 centimètres, et d'épaisseur de 5 millimètres, la puissance dissipée est de l'ordre de 0,5 Watt.

Dans une forme plus perfectionnée, illustrée à la figure 11, la plaque conductrice intermédiaire (39) est ajourée, pour former des boucles (40) de résistance minimale. Les dimensions de telles boucles sont avantageusement de l'ordre de celui du pas polaire des lames aimantées correspondantes.

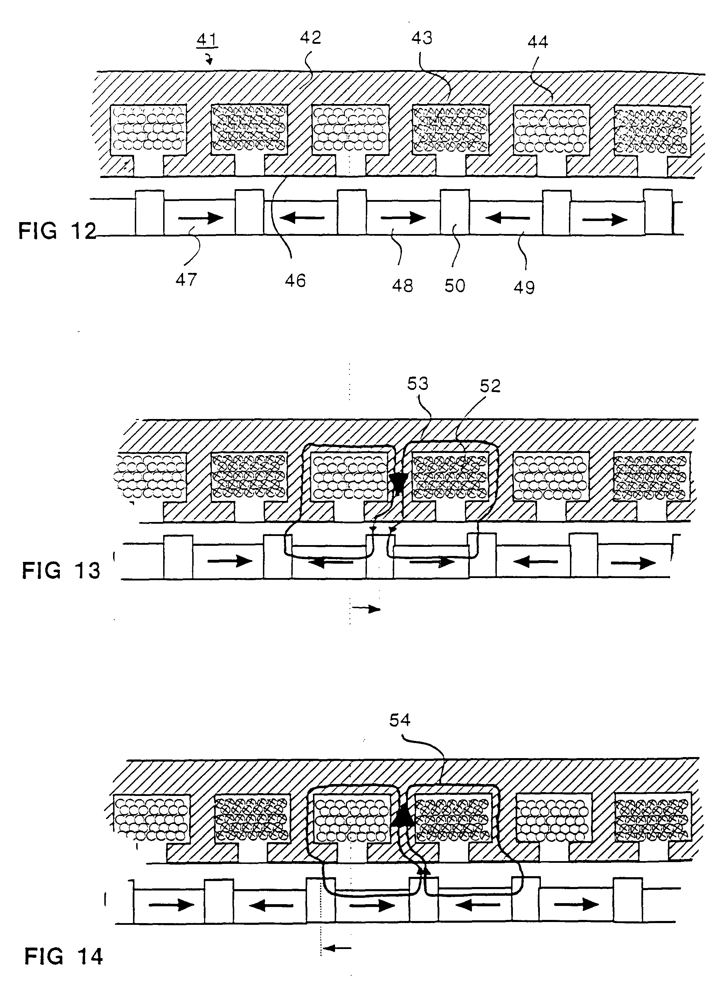

Dans une autre variante de réalisation illustrée à la figure 12, la plaque intermédiaire (41) est constituée par un corps magnétique (42), par exemple en fer doux, à l'intérieur duquel sont réalisés un ensemble de bobinages (43, 44) en un matériau plus conducteur, comme par exemple le cuivre. De la sorte, on augmente l'intensité du champ magnétique grâce à l'utilisation du corps en fer doux (42) tout en bénéficiant de la résistivité minimale du cuivre (43, 44) pour obtenir une intensité de courant induit supérieur.

De façon avantageuse, le corps magnétique (42) de la plaque conductrice (41) présente des dentures (46) aptes à canaliser le champ magnétique. En outre, la plaque aimantée (47) présente entre chacun de ses aimants (48, 49) des pièces polaires (50). En position de repos, la plaque aimantée (47) est disposée par rapport à la plaque intermédiaire (41) de telle manière que les pièces polaires (50) soient entre deux dentures (46) consécutives de la lame conductrice (41). Lors d'un mouvement vibratoire, lorsque la plaque conductrice (41) se déplace dans un sens par rapport à la plaque aimantée (voir la figure 13), les lignes de champ se referment comme illustré. Ainsi dans la spire conductrice (52), le champ magnétique (53) est dirigé dans une première direction. Lorsque la plaque conductrice se déplace dans le sens inverse d'une distance égale à l'amplitude du mouvement, les lignes de champ (54) sont illustrées à la figure 14. On observe que le champ magnétique est alors dirigé dans la direction opposée à celle illustrée précédemment. Le flux magnétique varie d'une amplitude importante pour un déplacement réduit, ce qui provoque des courants induits d'intensité plus importante.

Bien évidemment, l'invention couvre également les variantes de réalisation combinant les deux principes illustrés précédemment, c'est-à-dire associant des phénomènes de frottement efficaces à basse fréquence et à grande amplitude, avec des amortissements par courants induits mieux adaptés aux fréquences élevées. Ainsi, dans les modes de réalisation correspondant au premier principe de fonctionnement, (voir figures 1 à 9) les lames ferromagnétiques sont le siège de courants induits et voient donc les deux phénomènes cohabiter pour un meilleur amortissement.

### Application de l'invention au domaine du ski

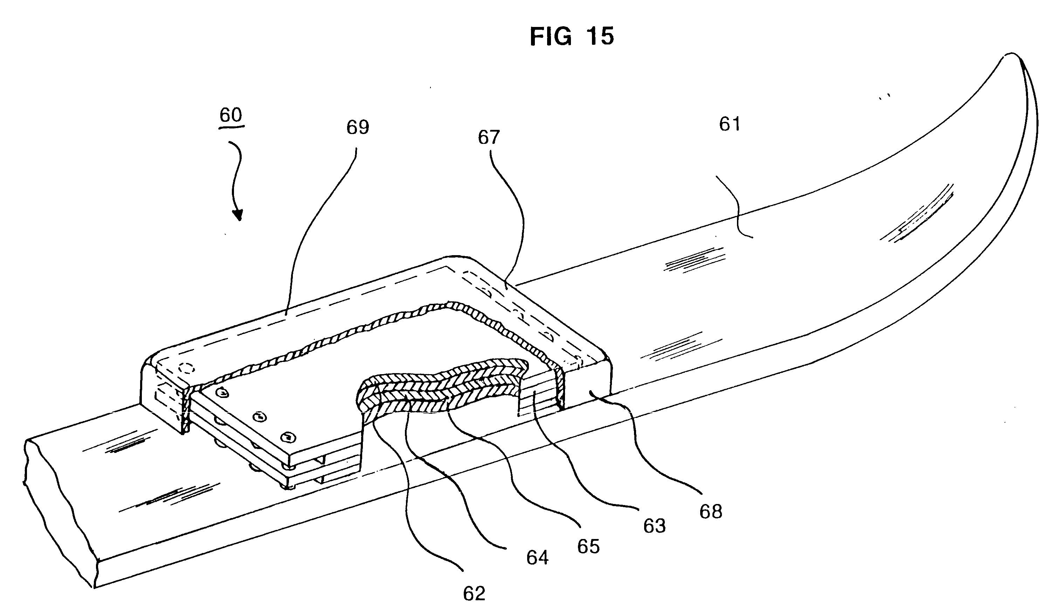

Comme on le voit en figure 15, l'amortisseur (60) conforme à l'invention peut être avantageusement disposé sur la zone avant d'un ski (61). Il présente une forme générale rectangulaire, de largeur légèrement inférieure à celle du ski et de longueur variant entre cinq et trente centimètres.

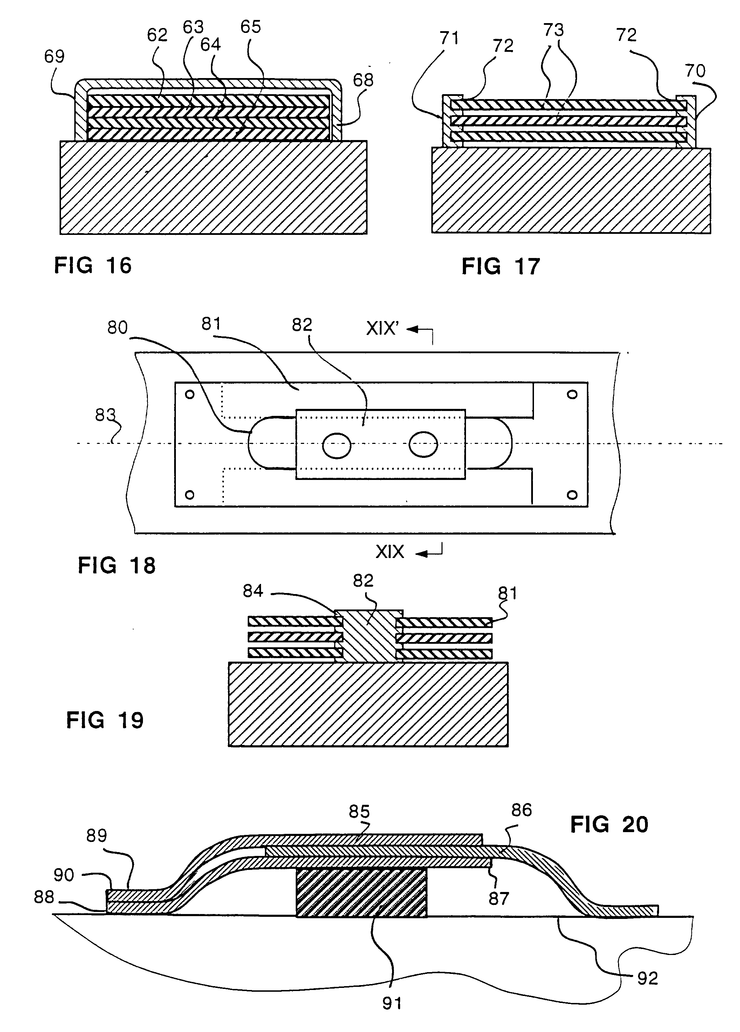

Avantageusement, cet ensemble (60) peut être capoté pour éviter toute intrusion de neige, comme on le voit à la figure 15. La coupe transversale de ce dispositif montré à la figure 16 laisse apparaître que le guidage latéral du déplacement des différentes lames (62, 65) entre elles, est obtenu par les parois latérales (68, 69) du capot (67), ceci dans le cas de figure où le dispositif fonctionne par frottement.

Par ailleurs, dans le cas de fonctionnement par courants induits, les différentes lames peuvent être montées dans un ensemble de glissières latérales (70, 71) représentées en figure 17 présentant des rainures longitudinales (72) dans lesquelles viennent coulisser les bords des lames (73). Cette disposition permet avantageusement de garantir l'écartement entre les lames, correspondant à un entrefer permettant d'utiliser les matériaux magnétiques à leur performance optimale.

On peut également assurer le guidage des différents éléments entre eux en ménageant à l'intérieur de l'ensemble des lames (81), une fente (80) longitudinale (voir figure 18). Cette fente (80) reçoit une barrette (82) solidaire du ski et parallèle à l'axe longitudinal (83) de celui-ci. Ainsi, le coulissement des lames (81) ne peut se faire que parallèlement à cette barrette (82) de centrage. Dans la forme perfectionnée illustrée à la figure 19, la barrette centrale (82) comporte une pluralité de rainures (84) longitudinales permettant le coulissement des lames (81) entre elles et le maintien de leur écartement.

Dans une autre forme de réalisation illustrée à la figure 20, les lames (85, 87) peuvent être conformées longitudinalement de telle manière à ce que les extrémités (88, 89) des lames destinées à être assemblées par un même point d'ancrage (90) soient toutes tangentes de manière à améliorer la compacité de l'ensemble.

Dans une forme avantageuse, un élément viscoélastique (91) peut être disposé entre le dessous du dispositif amortisseur et la surface du ski (92) de manière à absorber une partie supplémentaire de l'énergie de vibrations.

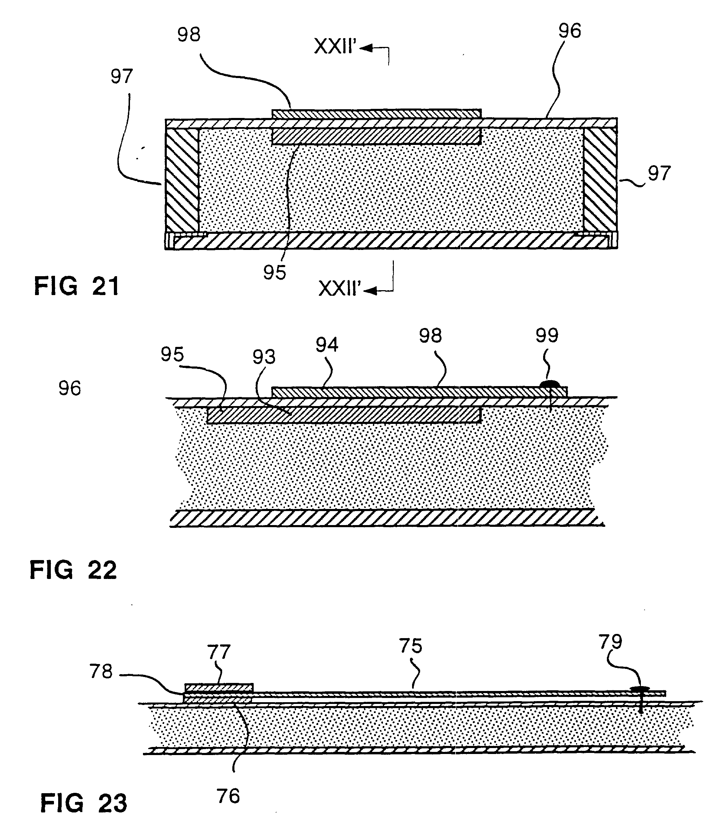

Dans la variante illustrée aux figures 21 et 22, une des lames magnétiques (95) est noyée à l'intérieur de la structure du ski, juste sous la paroi (96) formant la surface supérieure, et entre les chants (97). Cette lame (95) interagit avec une autre lame (98) située sur la face extérieure et ancrée par une de ses extrémités (99). Lorsque le ski se déforme, la lame aimantée se déplace par rapport à l'autre lame et engendre une résistance à la déformation soit par frottement sur la face supérieure du ski, soit par génération de courants induits, soit encore par les deux phénomènes.

Dans une variante illustrée à la figure 23, une des lames (75) du dispositif amortisseur est rigide et présente une extrémité (79) localisée relativement éloignée de l'ensemble des deux lames adjacentes (76,77). Ces deux lames (76,77) enserrent l'extrémité libre (78) de la lame intercalaire (75). La position éloignée des extrémités du dispositif génère une plus grande amplitude de coulissement lors d'une déformation du ski et partant, un meilleur amortissement. Bien évidemment, les différentes variantes de constitution et de fonctionnement du dispositif amortisseur sont adaptables à cette architecture spécifique.

### Application de l'invention au domaine du tennis

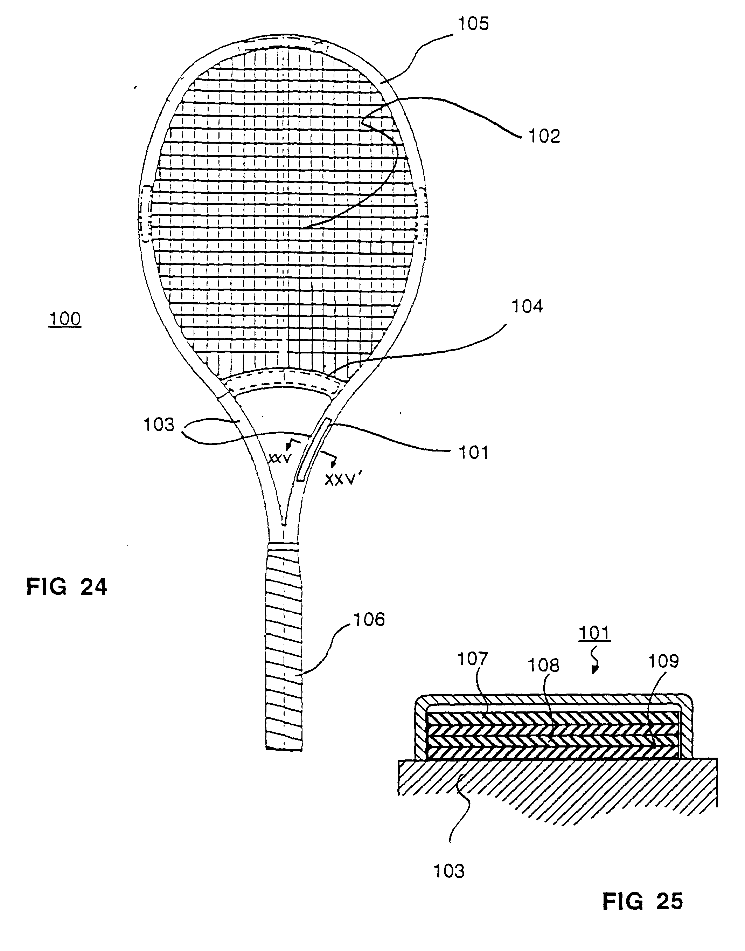

Comme on le voit à la figure 24, le dispositif (101) conforme à l'invention peut équiper une raquette de tennis (100), de squash, ou tout autre article similaire. On a représenté une forme dans laquelle l'amortisseur est implanté au niveau des branches (103) à la base du tamis (102), mais rien n'empêche de prévoir son implantation (représentée en pointillés) sur d'autres parties du cadre, et notamment au niveau du pont (104) reliant les branches (103).

Ainsi, lors des déformations engendrées par la frappe de la balle, le tamis (102) se déforme. De cette manière, les branches (103) transmettent jusqu'au manche (106) les vibrations résultant de cette déformation. Ces vibrations sont répercutées au niveau des branches (104) sur lequel les lames (107, 109) se trouvent placées, et l'ensemble amortisseur (101) produit l'effet désiré. Il va de soi que le dispositif amortisseur peut être implanté dans un logement aménagé à cet effet dans les branches afin de permettre une meilleure ergonomie.

### Application de l'invention au domaine du golf

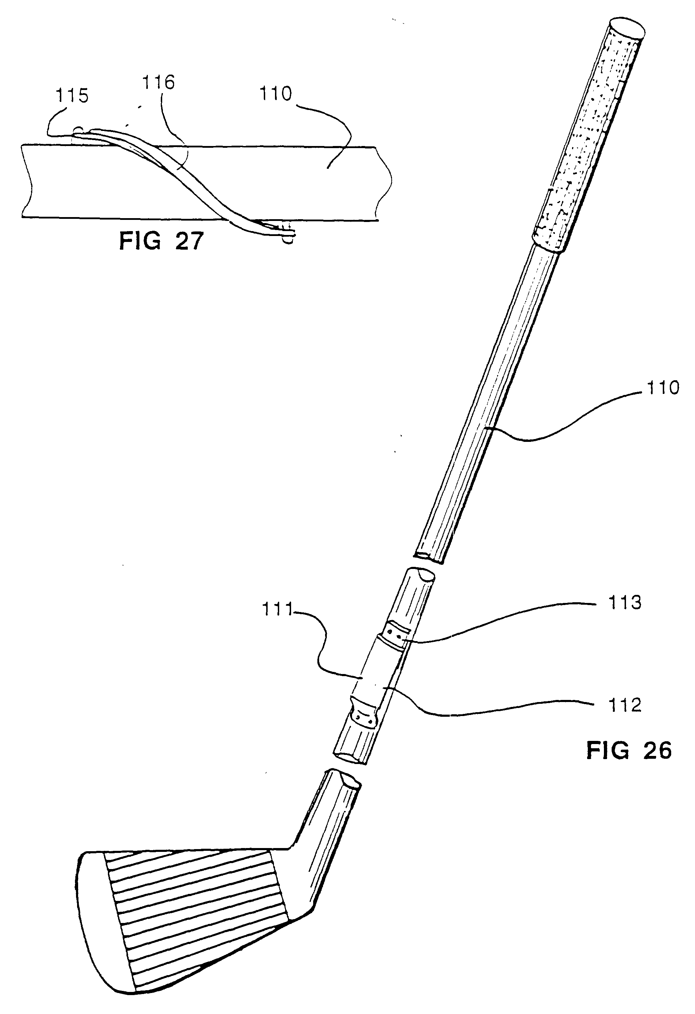

Comme illustré à la figure 26, le dispositif amortisseur (111) conforme à l'invention peut avantageusement équiper un manche (110) de club de golf dont on sait par ailleurs qu'il transmet au bras de l'utilisateur des vibrations gênantes consécutives à l'impact de la balle.

On a déterminé que les vibrations étaient nettement atténuées lorsque le dispositif amortisseur (111) est préférentiellement disposé à peu près au niveau du tiers inférieur du manche (110).

Dans une première forme de réalisation, chacune des lames (112, 113) épouse une forme de gouttière ou de tuile, dont l'axe de courbure est sensiblement confondu avec l'axe du manche, ceci afin d'obtenir une bonne adaptation et une bonne ergonomie.

Dans une autre forme de réalisation au club de golf montrée à la figure 27, les lames (115,116) épousent un contour gauche et s'enroulent sensiblement en hélice autour d'une portion du manche (110). En effet, l'impact de la balle étant décalé par rapport à l'axe du manche, il produit un moment de torsion qui se propage le long du manche. La présence d'un dispositif sensible aux déformations axiales du même manche permet avantageusement la diminution des effets de ce moment de torsion.

Il ressort de ce qui précède que le dispositif amortisseur de vibrations conforme à l'invention peut avantageusement équiper de nombreux articles de sport afin de dissiper une certaine partie de l'énergie vibratoire apparaissant lors des oscillations de sa structure.

Selon un premier principe de fonctionnement, l'utilisation d'un matériau magnétique permet de réaliser un contact des diverses lames coulissant les unes par rapport aux autres, contact nécessaire pour l'apparition de frottements, sans qu'il ne soit nécessaire d'adjoindre un moyen mécanique pour plaquer ces différentes lames entre elles.

Selon un second principe de fonctionnement, le déplacement d'un élément aimanté par rapport à une pièce conductrice permet d'engendrer des courants induits contrariant les déformations des articles sur lesquels est implantée l'invention.

## Revendications

1. Dispositif amortisseur (1) de vibrations destiné à être monté sur un article de sport, tel que notamment raquette de tennis, de squash, une planche de glisse ou un club de golf, comportant au moins deux éléments au moins en partie superposés (3, 4) pour former un empilement, et montés en coulissement l'un par rapport à l'autre, chaque élément (3, 4) dudit empilement étant solidaire de l'article au moins par une extrémité, les extrémités (13, 14) des éléments adjacents étant décalées l'une par rapport à l'autre de telle façon que les déformations de l'article (8) dues aux vibrations engendrent le coulissement des éléments adjacents (3, 4),
caractérisé en ce qu'au moins un des éléments superposés (4) est aimanté, un des autres éléments (3) de l'empilement étant en un matériau sensible au champ magnétique engendré par l'élément aimanté (4).

2. Dispositif selon la revendication 1, caractérisé en ce que deux éléments adjacents (3 - 7) sont solidaires de l'article par des extrémités opposées.

3. Dispositif selon la revendication 1, caractérisé en ce qu'au moins un premier élément (76,77) est totalement solidaire de la surface de l'article, et en ce que l'élément adjacent (75) est solidaire de l'article par une extrémité (79) éloignée et distante dudit premier élément (76,77) et coulisse par rapport au premier élément (75,76) lors des déformations de l'article.

4. Dispositif selon la revendication 1, caractérisé en ce que les différents éléments (3 - 7) sont tangents et frottent les uns sur les autres lors de leur coulissement relatif.

5. Dispositif selon la revendication 4, caractérisé en ce qu'au moins une des faces en regard de deux éléments adjacents (3, 4) de l'empilement est recouverte d'une couche destinée à adapter la capacité de frottement des deux éléments adjacents entre eux.

6. Dispositif selon la revendication 4, caractérisé en ce qu'au moins un des éléments adjacents (3) à l'élément aimanté (4) est en fer doux.

7. Dispositif selon la revendication 4, caractérisé en ce que l'empilement comporte au moins un ensemble de deux éléments (21, 22) immobiles l'un par rapport à l'autre dont l'un est constitué par l'élément aimanté (21) et l'autre (22) est attiré par l'élément aimanté (23), et un élément intermédiaire (24) intercalé entre les deux éléments dudit ensemble, et mobile par rapport à ceux-ci.

8. Dispositif selon la revendication 1, caractérisé en ce que l'élément aimanté (25) présente une aimantation multipolaire.

9. Dispositif selon la revendication 8, caractérisé en ce que l'aimantation multipolaire est distribuée sur une face de l'élément.

10. Dispositif selon la revendication 8, caractérisé en ce que l'aimantation multipolaire est distribuée sur deux faces de l'élément.

11. Dispositif selon la revendication 10, caractérisé en ce que l'élément aimanté est constitué d'une plaque aimantée (16) proprement dite et d'une culasse magnétique (17) refermant les lignes de champ.

12. Dispositif selon la revendication 4, caractérisé en ce que la face de l'élément aimanté (24) en regard des éléments adjacents (22) présente des zones (25) en excroissance formant pièces polaires canalisant les lignes de champ magnétiques.

13. Dispositif selon la revendication 1, caractérisé en ce qu'au moins un des éléments adjacents (31) à l'élément aimanté (30) comprend une zone en un matériau conducteur de l'électricité, dans laquelle apparaissent des courants induits lors du coulissement de l'élément aimanté (30).

14. Dispositif selon la revendication 13, caractérisé en ce que l'élément conducteur (39) présente une surface ajourée formant des boucles fermées (40).

15. Dispositif selon la revendication 13, caractérisé en ce que l'élément conducteur (41) comporte un corps (42) en matériau magnétique et des spires fermées (43, 44) en un matériau conducteur d'électricité.

16. Dispositif selon la revendication 13, caractérisé en ce que l'élément aimanté (47) et l'élément adjacent conducteur (45) présentent des pièces polaires (46, 50) destinées à canaliser le flux magnétique.

17. Dispositif selon l'une des revendications 1 à 16, caractérisé en ce que les éléments (3, 4) de l'empilement sont montés sur une embase souple (2) elle-même solidaire de l'article de sport.

18. Dispositif selon l'une des revendications 1 à 17, caractérisé en ce qu'un des éléments (95) est noyé à l'intérieur de l'article, sous sa surface extérieure (96).

19. Dispositif selon l'une des revendications 1 à 17, caractérisé en ce qu'il est entièrement noyé à l'intérieur de l'article.

20. Ski (61) caractérisé en ce qu'au moins une de ses faces extérieures comporte un dispositif amortisseur de vibrations (60) selon l'une des revendications 1 à 19.

21. Raquette de tennis (100) ou de squash, caractérisée en ce qu'elle comporte un dispositif amortisseur (101) selon l'une des revendications 1 à 19.

22. Club de golf (110) caractérisé en ce qu'il comporte un dispositif (111-113) selon l'une des revendications 1 à 19, qui épouse une forme allongée présentant un galbe en forme de gouttière ouvert vers le manche dont l'axe de courbure est sensiblement confondu avec l'axe du manche.

23. Club de golf caractérisé en ce qu'il comporte un dispositif (115, 116) selon l'une des revendications 1 à 19, qui épouse une forme gauche vrillée s'enroulant en hélice sur une portion du manche du club.

## Patentansprüche

1. Vorrichtung (1) zum Dämpfen von Schwingungen, die dazu vorgesehen ist, auf einem Sportgegenstand, wie insbesondere einem Tennisschläger, Squashschläger, einem Gleitbrett oder einem Golfschläger montiert zu werden, mit zumindest zwei Elementen (3, 4), die zumindest teilweise übereinander angeordnet sind, um eine Stapelanordnung zu bilden, und die relativ zueinander verschiebbar montiert sind, wobei jedes Element (3, 4) der Stapelanordnung über zumindest ein Ende fest mit dem Gegenstand verbunden ist, wobei die Enden (13, 14) benachbarter Elemente relativ zueinander versetzt sind, derart, daß Verformungen des Gegenstands (8) aufgrund der Schwingungen eine Verschiebung der benachbarten Elemente (3, 4) hervorrufen,
dadurch gekennzeichnet, daß zumindest eines der übereinander angeordneten Elemente (4) magnetisch ist, und daß eines der anderen Elemente (3) der Stapelanordnung aus einem Material ist, das für das von dem magnetischen Element (4) erzeugte Magnetfeld empfindlich ist.

2. Vorrichtung nach Anspruch 1, dadurch gekennzeichnet, daß zwei benachbarte Elemente (3 - 7) fest mit dem Gegenstand über einander gegenüberliegende Enden verbunden sind.

3. Vorrichtung nach Anspruch 1, dadurch gekennzeichnet, daß zumindest ein erstes Element (76, 77) vollständig mit der Oberfläche des Gegenstands fest verbunden ist, und daß das benachbarte Element (75) über ein Ende (79) fest mit dem Gegenstand verbunden ist, das sich von dem ersten Element (76, 77) weg erstreckend von diesem beabstandet ist, und sich relativ zu dem ersten Element (75, 76) während der Verformungen des Gegenstands verschiebt.

4. Vorrichtung nach Anspruch 1, dadurch gekennzeichnet, daß die verschiedenen Elemente (3 - 7) sich berühren und während ihrer Relativverschiebung aneinander reiben.

5. Vorrichtung nach Anspruch 4, dadurch gekennzeichnet, daß zumindest eine der gegenüberliegenden Seiten der beiden benachbarten Elemente (3, 4) der Stapelanordnung mit einer Schicht bedeckt ist, die dazu vorgesehen ist, das Reibvermögen der Reibung der beiden benachbarten Elemente untereinander anzupassen.

6. Vorrichtung nach Anspruch 4, dadurch gekennzeichnet, daß zumindest eines der dem magnetischen Element (4) benachbarten Elemente (3) aus Weicheisen ist.

7. Vorrichtung nach Anspruch 4, dadurch gekennzeichnet, daß die Stapelanordnung zumindest eine Anordnung aus zwei relativ zueinander unbeweglichen Elementen (21, 22), von denen das eine durch das magnetische Element (21) gebildet ist und das andere (22) von dem magnetischen Element (23) angezogen wird, und ein Zwischenelement (24) aufweist, das zwischen den beiden Elementen der genannten Anordnung eingefügt und relativ zu diesen beweglich ist.

8. Vorrichtung nach Anspruch 1, dadurch gekennzeichnet, daß das magnetische Element (25) eine vielpolige Magnetisierung aufweist.

9. Vorrichtung nach Anspruch 8, dadurch gekennzeichnet, daß die vielpolige Magnetisierung über eine Seite des Elements verteilt ist.

10. Vorrichtung nach Anspruch 8, dadurch gekennzeichnet, daß die vielpolige Magnetisierung über zwei Seiten des Elements verteilt ist.

11. Vorrichtung nach Anspruch 10, dadurch gekennzeichnet, daß das magnetische Element aus einem eigentlichen magnetischen Belag (16) und einem Magnetjoch (17) gebildet ist. das die Feldlinien schließt.

12. Vorrichtung nach Anspruch 4, dadurch gekennzeichnet, daß die den benachbarten Elementen (22) gegenüberliegende Seite des magnetischen Elements (24) ausgestülpte Bereiche (25) aufweist, die Polschuhe bilden, die die magnetischen Feldlinien leiten.

13. Vorrichtung nach Anspruch 1, dadurch gekennzeichnet, daß zumindest eines der dem magnetischen Element (30) benachbarten Elemente (31) einen Bereich aus einem elektrisch leitenden Material aufweist, in dem während der Verschiebung des magnetischen Elements (30) induzierte Ströme auftreten.

14. Vorrichtung nach Anspruch 13, dadurch gekennzeichnet, daß das leitende Element (39) eine durchbrochene Oberfläche aufweist, die geschlossene Schleifen (40) bildet.

15. Vorrichtung nach Anspruch 13, dadurch gekennzeichnet, daß das leitende Element (41) einen Körper (42) aus magnetischem Material und geschlossene Windungen (43, 44) aus einem elektrisch leitenden Material aufweist.

16. Vorrichtung nach Anspruch 13, dadurch gekennzeichnet, daß das magnetische Element (47) und das benachbarte leitende Element (45) Polschuhe (46, 50) aufweist, die dazu vorgesehen sind, den Magnetfluß zu leiten.

17. Vorrichtung nach einem der Ansprüche 1 bis 16, dadurch gekennzeichnet, daß die Elemente (3, 4) der Stapelanordnung auf einem biegsamen Sockel (2) montiert sind, der seinerseits fest mit dem Sportgegenstand verbunden ist.

18. Vorrichtung nach einem der Ansprüche 1 bis 17, dadurch gekennzeichnet, daß eines der Elemente (95) in das Innere des Gegenstands unter seiner äußeren Oberfläche (96) eingebettet ist.

19. Vorrichtung nach einem der Ansprüche 1 bis 17, dadurch gekennzeichnet, daß sie gänzlich in das Innere des Gegenstands eingebettet ist.

20. Ski (61), dadurch gekennzeichnet, daß zumindest eine seiner Außenseiten eine Vorrichtung zum Dämpfen von Schwingungen (60) nach einem der Ansprüche 1 bis 19 aufweist.

21. Tennis- oder Squashschläger (100), dadurch gekennzeichnet, daß er eine Vorrichtung (101) zum Dämpfen nach einem der Ansprüche 1 bis 19 aufweist.

22. Golfschläger (110), dadurch gekennzeichnet, daß er eine Vorrichtung (111 - 113) nach einem der Ansprüche 1 bis 19 aufweist, die eine längliche Form mit einer Kontur in Form einer zum Schaft hin offenen Rinne aufweist, deren Krümmungsachse im wesentlichen mit der Achse des Schafts zusammenfällt.

23. Golfschläger, dadurch gekennzeichnet, daß er eine Vorrichtung (115, 116) nach einem der Ansprüche 1 bis 19 aufweist, die eine gedrehte Raumform hat, die sich schraubenförmig um einen Abschnitt des Schafts des Schlägers windet.

## Claims

1. Vibration damper device (1) intended to be mounted on a sports article such as, in particular, a tennis or squash racket, a gliding board or a golf club, including at least two elements (3, 4) at least partly superposed to form a stack and mounted so as to slide relative to one another, each element (3, 4) in the said stack being secured to the article at least by one end, the ends (13, 14) of the adjacent elements being offset relative to one another so that the deformations of the article (8) due to the vibrations cause the adjacent elements (3, 4) to slide, characterized in that at least one of the superposed elements (4) is magnetized, one of the other elements (3) in the stack being made of a material which is sensitive to the magnetic field generated by the magnetized element (4).

2. Device according to Claim 1, characterized in that two adjacent elements (3 - 7) are secured to the article by opposite ends.

3. Device according to Claim 1, characterized in that at least a first element (76, 77) is fully secured to the surface of the article, and in that the adjacent element (75) is secured to the article by an end (79) separated from and at a distance from the said first element (76, 77), and slides relative to the first element (75, 76) when the article is deformed.

4. Device according to Claim 1, characterized in that the various elements (3 - 7) touch and exert friction on one another when they slide relative to one another.

5. Device according to Claim 4, characterized in that at least one of the contiguous faces of two adjacent elements (3, 4) in the stack is covered with a layer intended to adjust the capacity of the two adjacent elements to exert friction on one another.

6. Device according to Claim 4, characterized in that at least one of the elements (3) adjacent to the magnetized element (4) is made of soft iron.

7. Device according to Claim 4, characterized in that the stack includes at least one pair of elements (21, 22) which cannot move relative to one another, one of which consists of the magnetized element (21) and the other (22) of which is attracted by the magnetized element (23), and an intermediate element (24) which is interposed between the two elements of the said pair and can move relative to them.

8. Device according to Claim 1, characterized in that the magnetized element (25) has multipole magnetization.

9. Device according to Claim 8, characterized in that the multipole magnetization is distributed over one face of the element.

10. Device according to Claim 8, characterized in that the multipole magnetization is distributed over two faces of the element.

11. Device according to Claim 10, characterized in that the magnetized element consists of a magnetized plate proper (16) and a magnetic yoke (17) which encloses the field lines.

12. Device according to Claim 4, characterized in that the face of the magnetized element (24) contiguous to the adjacent elements (22) has protruding regions (25) which form pole pieces channelling the magnetic field lines.

13. Device according to Claim 1, characterized in that at least one of the elements (31) adjacent to the magnetized element (30) comprises a region made of an electrically conductive material, in which induced currents appear when the magnetized element (30) slides.

14. Device according to Claim 13, characterized in that the conductive element (39) has an openworked surface forming closed loops (40).

15. Device according to Claim 13, characterized in that the conductive element (41) includes a body (42) made of magnetic material and closed turns (43, 44) made of an electrically conductive material.

16. Device according to Claim 13, characterized in that the magnetized element (47) and the adjacent conductive element (45) have pole pieces (46, 50) intended to channel the magnetic flux.

17. Device according to one of Claims 1 to 16, characterized in that the elements (3, 4) in the stack are mounted on a flexible base (2) which is itself secured to the sports article.

18. Device according to one of Claims 1 to 17, characterized in that one of the elements (95) is embedded inside the article, under its outer surface (96).

19. Device according to one of Claims 1 to 17, characterized in that it is completely embedded inside the article.

20. Ski (61), characterized in that at least one of its upper faces includes a vibration damper device (60) according to one of Claims 1 to 19.

21. Tennis or squash racket (100), characterized in that it includes a damper device (101) according to one of Claims 1 to 19.

22. Golf club (110), characterized in that it includes a device (111-113) according to one of Claims 1 to 19, which is of an elongate shape configured in the form of a channel which is open towards the shaft and whose axis of curvature substantially coincides with the axis of the shaft.

23. Golf club, characterized in that it includes a device (115, 116) according to one of Claims 1 to 19, which is of a twisted skew shape helically wound over a portion of the shaft of the club.
